# EUROPÄISCHE PATENTANMELDUNG

(11) **EP 0 971 015 A1**
(43) Veröffentlichungstag der Anmeldung: **12.01.2000**
(21) Anmeldenummer: 99112304.3
(22) Anmeldetag: 26.06.1999
(51) Int. Cl.: C09K 17/30, A01G 9/10

(54) **Verwendung einer Wasser-NCO-Prepolymer-Emulsion zur Verfestigung von Pflanzensubstraten**

(30) Priorität: 10.07.1998 DE 19830955
(71) Anmelder: Bayer Aktiengesellschaft, 51368 Leverkusen (DE); ERNST SONDERHOFF GmbH & Co. KG, D-50829 Köln (DE)
(72) Erfinder: Bohne, Franz-Josef, 42799 Leichlingen (DE); Seifert, Peter, Dr., 53797 Lohmar (DE); Herrmann, Marc, Dr., 42799 Leichlingen (DE); Schmidt, Manfred, Dr., 41540 Dormagen (DE); Langerbeins, Klaus, Dr., 50269 Pulheim (DE); Link, Alfred, Dr., 50129 Bergheim-Giessen (DE); Weise, Karl-Heinz, 56204 Hillscheid (DE)

(57) **Zusammenfassung**

Verwendung einer Wasser-NCO-Preopolymer-Emulsion, enthaltend 5 bis 50 Gewichtsteile des Prepolymers, bezogen auf 100 Gewichtsteile der Wassermenge, zur Verfestigung eines Pflanzensubstrats.

## Beschreibung

Die Erfindung betrifft die Verfestigung eines Pflanzensubstrats mittels einer Wasser-NCO-Prepolymer-Emulsion.

Die Pflanzenanzucht (Aussaat und Stecklingsvermehrung) und Pflanzenaufzucht (Weiterzüchtung der zum Pflänzling entwickelten Pflanze) wird traditionsgemäß in Pflanzenerden betrieben, welche üblicherweise je nach Pflanzenart aus Gemischen von Torf, Sand, Gartenerden und Komposten, Moos-Rindenböden oder sogenannten Fertigerden, denen vielfach Kunststoffgranulate als Hilfsmittel zur Bodenlockerung zugesetzt sind, bestehen. In Großgärtnereien werden zur Pflanzen- und -aufzucht auch oft Formkörper eingesetzt, welche aus verfestigten Pflanzensubstraten bestehen. Diese verfestigten Substratkörper enthalten den Pflanzensämling und können bei einem Standortwechsel direkt mit dem Pflänzchen verpflanzt werden.

Ein bekanntes Verfahren zur Herstellung von Formkörpern zur Pflanzenanzucht ist die Verklebung von Anzuchtsubstraten mit auf organischen Di- und/oder Polyisocyanaten basierenden Prepolymeren. Hierbei wird zunächst eine breiige, formbare Masse aus Wasser und Anzuchtsubstrat, wie z.b. Torf erzeugt, die dann mit dem als Klebemittel fungierenden, vorzugsweise hydrophilen NCO-Prepolymer vernetzt wird. Die dabei entstehende Mischung bleibt noch einige Zeit formbar und kann in dieser Zeit in geeignete Formen eingebracht werden, wo dann die Aushärtung zu den gewünschten Formkörpern erfolgen kann. Für dieses Verfahren wird ein vorbereitetes Anzuchtsubstrat/Wassergemisch benötigt, das mittels z.b. Rührer oder Kneter hergestellt werden kann, in das anschließend das Prepolymer eingebracht wird. Nach der Verfestigung des z.B. Torf/Wasser/Prepolymergemisches wird von den so hergestellten Formkörpern ein Teil des Wasser abgeschieden, das entweder entsorgt oder im Kreislauf gefahren werden muß. Das restliche Wasser verbleibt in den Formkörpern, die dann jedoch vor der weiteren Verarbeitung bzw. vor dem Versand getrocknet werden müssen. Dieser Stand der Technik ist in den Patentschriften DE-A-3 829 256, DE-A-4 018 718, EP-A-0 346 627, DE-A-3 839 986, DE-A-3 039 294, DE-A-2 807 619 und WO-A-97/19585 beschrieben.

Aufgabe der vorliegenden Erfindung war es, Pflanzensubstrat-haltige Polyurethan-/Polyharnstoff-Formkörper zur Pflanzenan- und -aufzucht auf technisch einfachere Weise herzustellen.

Es wurde nun gefunden, daß sich Pflanzensubstrat-haltige, mit einem Polyurethan-/Polyharnstoff-Kunststoff verfestigte Formkörper herstellen lassen, wenn zur Verfestigung der Formkörper eine Emulsion aus Wasser und einem Prepolymer auf Basis organischer Di- und/oder Polyisocyanate eingesetzt wird.

Gegenstand der Erfindung ist somit die Verwendung einer Wasser-NCO-Prepolymer-Emulsion, enthaltend 5 bis 50 Gew.-Teile des Prepolymers, bezogen auf 100 Gew.-Teile der Wassermenge, zur Verfestigung eines Pflanzensubstrats.

Prinzipiell sind alle in der PUR-Technologie eingesetzten Prepolymere auf Basis organischer Di- und/oder Polyisocyanate möglich. Bevorzugt wird ein Toluylendiisocyanat-Prepolymer verwendet.

Überraschenderweise wurde festgestellt, daß sich bei der erfindungsgemäßen Verwendung der genannten Emulsion Vorteile ergeben. Das hydrophile Prepolymer bildet nämlich mit Wasser eine Emulsion, die je nach Verarbeitungstemperatur und Verhältnis Wasser zu Prepolymer ca. 1 bis 6 Minuten stabil bleibt. Werden zu der Wasser/Prepolymer-Emulsion zusätzlich die in der PUR-Technologie beschriebenen Katalysatoren und/oder Verzögerer gegeben, kann diese Verarbeitungszeit (Topfzeit) zusätzlich variiert werden. In dieser Zeit kann diese Emulsion mit dem Anzuchtsubstrat, wie z.B. Torf, direkt durch geeignete Verfahren, wie z.B. Rühren und Kneten, einfach vermischt werden. Dieses einfache Verfahren erlaubt sogar eine Vermischung von Hand. Diese Vorgehensweise hat den Vorteil, daß durch günstigere Volumenverhältnisse der Wasser/Prepolymer-Emulsion zum Pflanzensubstrat eine gute Verteilung des Prepolymers im Anzuchtsubstrat erfolgt und dadurch homogene Reaktionsgemische entstehen.

Es können alle, in der Pflanzenzucht üblichen organischen und/oder anorganischen und/oder pflanzliches Füllmaterial enthaltende Pflanzensubstrate oder humushaltige Pflanzensubstrate wie Torf, Sand/Erdgemische, Blumenerde, Klarschlamm, Kompost, Rindengranulate, vorzugsweise Torf, Blumenerde, Klärschlarum und/oder Kompost erfindungsgemäß verfestigt werden.

Neben dem humushaltigen Pflanzensubstrat können gegebenenfalls auch noch ein oder mehrere Zusatzstoffe wie z.B. Nährsubstanzen, Wachstumsregulatoren, Puffersubstanzen, Schädlingsbekämpfungsmittel, Abwehrmittel, Mineralsalze und Spurenelemente sowie alle Düngemittel, die für das Wachstum der Pflanzen erforderlich sind, in fester oder flüssiger Form in das Gemisch eingebracht werden.

Vorzugsweise liegt das Verhältnis der Wasser-Prepolymer-Emulsion zur Pflanzensubstratmasse im Bereich zwischen 5:1 bis 1:1, bezogen auf die Masse des Pflanzensubstrats. Besonders bevorzugt ist ein Verhältnis von 4:1.

In einer weiteren bevorzugten Ausführung können der Wasser-Prepolymer-Emulsion sowohl reaktionsbeschleunigende als auch reaktionsverzögemde Substanzen sowie auch andere Hilfsstoffe, z.B. Emulgatoren zugemischt werden. Als reaktionsbeschleunigende Substanzen können dabei generell Amine, beispielsweise Diazabicyclooctan (DABCO), als reaktionsverzögernde Substanzen generell Säuren, z.B. 2-Ethylhexansäure oder Chlorpropionsäure zugemischt werden.

Auch durch die Temperatur des in der Emulsion eingesetzten Wassers kann die Reaktionszeit gesteuert werden. Wird Wasser mit einer Temperatur oberhalb der Raumtemperatur, insbesondere im Bereich zwischen 25 und 50°C zugefügt, kann die Reaktionszeit bis zur Verfestigung des hergestellten Formkörpers erheblich verkürzt werden. Eine Wassertemperatur unterhalb der Raumtemperatur, z.B. zwischen 5 und 15°C, führt hingegen zur einer Verlangsamung der Verfestigungszeit.

Die Vereinfachung bei Herstellung der mit Polyurethan verfestigten Pflanzensubstrate besteht bei der erfindungsgemäßen Verwendung der Wasser-NCO-Prepolymer-Emulsion im Wegfall von Maßnahmen wie intensives Homogenisieren der normalerweise ungünstigen Volumenverhältnisse von 100 Tln. Wasser-/Torfgemisch zu ca. 5 bis 10 Tln. Prepolymer, die außerdem erfahrungsgemäß sehr hohe Viskositäten von 5 000 bis 50 000 mPas besitzen, die das Einrühren zusätzlich erschweren.

Die Durchführung des Verfestigungsvorganges mittels der Wasser-NCO-Prepolymer-Emulsion bringt deshalb sowohl durch günstigere Volumenverhältnisse als auch durch niedrige Viskositäten der Wasser-NCO-Prepolymer-Emulsion von < 100 mPas Vorteile, die die Konstruktion einer einfachen und kostengünstigeren Anlage zulassen und dadurch den Herstellungsprozeß der Pflanzenanzuchtsubstrat-Formkörper vereinfachen.

Des weiteren können über die Temperatur des Wasser-NCO-Prepolymergemisches und/oder die Verfestigungsreaktion beschleunigende bzw. verlangsamende Zusätze schwankende Produktionsbedingungen, die durch z.B. Torfqualität und/oder Jahreszeit hervorgerufen werden, ausgeglichen werden. Neben einer Kostensenkung bei Herstellung der Pflanzensubstrat-Formkörper kann somit in vorteilhafter Weise auch eine höhere Produktivität erreicht werden.

Neben der Zierpflanzenanzucht können die beschriebenen Wasser-Prepolymer-Emulsionen z.B. auch in der Baumpflanzenzucht und im Forstgewerbe zur Koniferen-Anzucht genutzt werden. Des weiteren können die erfindungsgemäßen Wasser/Prepolymeremulsinen zur Verfestigung von z.B. Dünen und Hängen benutzt werden.

Die nachfolgenden Beispiele sollen die Erfindung näher erläutern, ohne sie jedoch in ihrem Umfang zu begrenzen.

### Beispiele

### Beispiel 1

### Herstellung des NCO-Prepolymers SDA 4928/3

1 381 g Toluylendiisocyanat (100 Gew.-% 2,4-Isomer) wurden mit 8 619 g eines Polyethergemisches bestehend aus 6 464 g eines linearen, Propylenglykol-gestarteten Polyethers mit einer OH-Zahl von 56, 2 127 g eines trifunktionellen, Glycerin-gestarteten Polyethers mit einer OH-Zahl 37 und 28 g eines trifunktionellen, Tri-ethanolgestarteten Polyethers mit einer OH-Zahl von 145 versetzt und 2 Stunden bei 60°C gerührt.

Man erhielt so ein Prepolymer mit folgenden analytischen Daten:
- NCO-Gehalt:: 3,2 Gew.-%
- Viskosität (20°C):: 7 258 mPas

### Beispiele 2 bis 14

Die Wasser/Prepolymer-Emulsion wurde mittels Laborrührer (2335 U/min) innerhalb von 15 sec hergestellt. Bei den Versuchen mit Torf wurde anschließend das Pflanzenanzuchtsubstrat zügig zugegeben und nochmals 15 sec verrührt.

Beobachtet wurde sowohl die Verfestigungszeit des Prepolymers in der wäßrigen Emulsion alleine als auch die Verfestigungszeit des Wasser-/Prepolymer-Torfgemisches mittels Druckprüfung mit einem Holzstab.

Die nachfolgende Tabelle zeigt die eingesetzten Prepolymer- und Torfmengen sowie die unter den unterschiedlichen Reaktionsbedingungen erhaltenen Verfestigungszeiten.

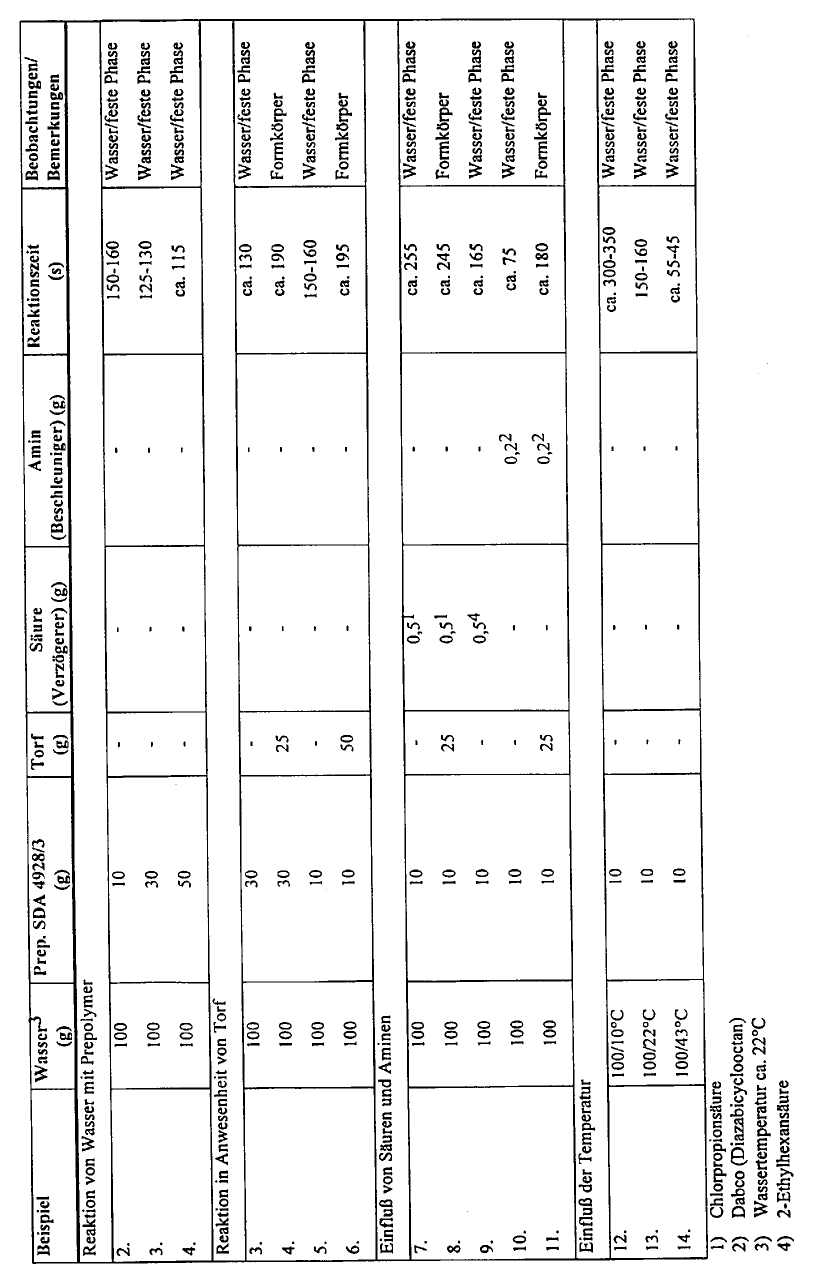

## Patentansprüche

1. Verwendung einer Wasser-NCO-Prepolymer-Emulsion, enthaltend 5 bis 50 Gew.-Teile eines NCO-Prepolymers, bezogen auf 100 Gew.-Teile der Wassermenge, zur Verfestigung eines Pflanzensubstrats.

2. Verwendung nach Anspruch 1, dadurch gekennzeichnet, daß das Mengenverhältnis der Wasser-NCO-Prepolymer-Emulsion zur Pflanzensubtratmenge zwischen 5:1 bis 1:1, bezogen auf die Pflanzensubtratmenge liegt.

3. Verwendung nach einem der Ansprüche 1 bis 2, dadurch gekennzeichnet, daß die Wasser-NCO-Prepolymer-Emulsion als Reaktionsbeschleuniger Amine oder als Reaktionsverzögerer anorganische und organische Säuren enthält.

4. Verwendung nach einem der Ansprüche 1 bis 3, dadurch gekennzeichnet, daß die Wasser-NCO-Prepolymer-Emulsion Emulgatoren oder weitere Hilfsstoffe enthält.

5. Verwendung nach einem der Ansprüche 1 bis 4, dadurch gekennzeichnet, daß die Temperatur der Wasser-NCO-Prepolymer-Emulsion zwischen 5 und 50°C liegt.

6. Verwendung nach einem der Ansprüche 1 bis 5, dadurch gekennzeichnet, daß als Pflanzensubstrat organische und/oder anorganische und/oder pflanzliches Füllmaterial enthaltende Pflanzensubstrate und/oder humushaltige Pflanzensubstrate eingesetzt werden.

7. Verwendung nach einem der Ansprüche 1 bis 6, dadurch gekennzeichnet, daß eine Wasser-Toluylendiisocyanat-Prepolymer-Emulsion eingesetzt wird.
